# EUROPÄISCHE PATENTSCHRIFT

(11) **EP 0 762 023 B1**
(45) Veröffentlichungstag und Bekanntmachung des Hinweises auf die Patenterteilung: **07.06.2000**
(21) Anmeldenummer: 96111856.9
(22) Anmeldetag: 23.07.1996
(51) Int. Cl.: F16K 15/04

(54) **Sitzventil**
Lift valve
Soupape

(30) Priorität: 30.08.1995 DE 29513944 U
(43) Veröffentlichungstag der Anmeldung: 12.03.1997
(73) Patentinhaber: HEILMEIER & WEINLEIN Fabrik für Oel-Hydraulik GmbH & Co. KG, 81673 München (DE)
(72) Erfinder: Brunner Rudolf, 85598 Baldham (DE)
(74) Vertreter: Grünecker, Kinkeldey, Stockmair & Schwanhäusser Anwaltssozietät

(56) Entgegenhaltungen:
- DD-A- 247 255
- DE-A- 4 238 094
- US-A- 4 676 271

## Beschreibung

Die Erfindung betrifft ein Sitzventil der im Oberbegriff des Patentanspruchs 1 angegebenen Art.

Bei seit Jahrzehnten üblichen Kugelsitzventilen mit kegeligem Ventilsitz hat sich ein Kegelwinkel von etwa 70° als optimal durchgesetzt, mit dem sichergestellt ist, daß bei zum jeweiligen Ventilsitz passenden Kugeldurchmesser das Schließelement weder klemmt (Kegelwinkel <70°), noch nur unbefriedigend abdichtet (Kegelwinkel >70°). Der Kugeldurchmesser ist so gewählt, daß der Kontaktbereich zwischen der kugeligen Dichtfläche und dem Ventilsitz in etwa in der Mitte der Tiefe des Ventilsitzes liegt. Da der Kugeldurchmesser größer ist als der Durchmesser des Kontaktbereiches bzw. der größere Innendurchmesser des Ventilsitzes, und das Druckmittel die Kugel außen umströmt, erfordert eine Vollkugel relativ viel Bauraum in zur Durchgangsachse des Ventilsitzes senkrechter Richtung. Wegen der Neigung der Vollkugel zum Tanzen ist im Regelfall der Ventilsitz gehärtet. Ferner können sich Probleme mit einer direkt an der Vollkugel angreifenden Ventilfeder ergeben, weil die frei drehbare Vollkugel das anliegende Ende der meist schwachen Feder dann seitlich versetzt, wodurch die Feder beim Öffnungshub klemmen kann. Diese Nachteile nahm man zunächst in Kauf, weil Vollkugeln als Schließelemente in praktisch allen denkbaren Größen kostengünstig erhältlich sind.

Um in Richtung der Durchgangsachse des Ventilsitzes Bauraum zu sparen, ist es aus DE 31 12 932 A1 bekannt, aus einer Vollkugel ein Schließelement mit pilzartiger Form, d.h. mit kugeligem Kopf und einem Führungsschaft, zu bilden. Der Führungsschaft übernimmt die Bewegungsführung des Schließelements. Die spanende Bearbeitung einer Vollkugel bis zur Pilzform ist zeitaufwendig und kostenintensiv. Ferner zeigte sich in der Praxis, daß aus der Strömungsdynamik entstehende Kräfte den Führungsschaft am Ansatz zum Pilzkopf brechen. Ferner neigt die scharfe Kante des Pilzkopfrandes zum Eingraben in die Führung.

In einem aus DE 42 38 094 A1 bekannten, gattungsgemäßen Sitzventil ist das Schließelement aus einer Vollkugel mit pilzförmiger Gestalt gebildet, wobei der Pilzkopfrand eine kurze zylindrische Führungsfläche aufweist, um die Kräfte auf die Führungsfläche, und den Führungsschaft zu verteilen. Eine Verkürzung des Einbauraums in Richtung der Durchgangsachse des Ventilsitzes ist der Grund dieser Schließelementform. Einbauraum wird in dieser Richtung gespart, weil sich die das Schließelement beaufschlagende Feder innerhalb der Kontur der Vollkugel unterbringen läßt. Ein nennenswerter Gewinn an Einbauraum quer zur Richtung der Durchgangsachse des Ventilsitzes wird nicht erreicht, da der Durchmesser der Führungsfläche größer als 90% des Vollkugel-Durchmessers ist. Die Herstellung des Schließelementes aus einer Vollkugel durch Drehen ist so teuer, daß als Alternative durchaus das Drehen des Schließelementes aus Vollmaterial bzw. Stangenmaterial in Frage kommt, wie es beispielsweise aus DD-A-247 255 bekannt ist. Bei dem dort erläuterten Sitzventil ist das Schließelement eine Halbkugel, die durch einen zylindrischen Fortsatz mit dem Durchmesser der Halbkugel nach hinten verlängert ist. Am rückwärtigen Ende des zylindrischen Fortsatzes ist ein dünner Schaft angeformt, so daß die Länge des Schließelements insgesamt größer ist als der Kugeldurchmesser. Eine Vollkugel wäre hier als Grundkörper nicht brauchbar.

Aus US-A-4 676 271 sind verschiedene Schließelement-Formen bekannt, die auf einer Kugelform basieren. Eine Ausführungsform mit zylindrischer Führungsfläche läßt sich wegen seiner Länge nicht aus einer Vollkugel bilden.

Der Erfindung liegt die Aufgabe zugrunde, bei einem Sitzventil unter Nutzen einer kostengünstigen Vollkugel verbesserte und erweiterte Funktionen mit signifikantem Raumgewinn quer zur Durchgangsrichtung des Ventilsitzes zu erreichen.

Die gestellte Aufgabe wird erfindungsgemäß mit den Merkmalen des Patentanspruchs 1 gelöst.

Wegen der Abkehr von der Pilzform läßt sich das Schließelement außerordentlich kostengünstig herstellen, denn die die beiden Kugelkalotten trennende, zylindrische Führungsfläche läßt sich rasch und mit hoher Präzision an preiswerten Vollkugeln formen, was bei einer Großserienproduktion vorteilhaft ist. Da von der Vollkugel - im Bereich der späteren Führungsfläche - Material abgetragen ist, das dort für die Dichtfunktion ohnedies nicht gebraucht wird, beansprucht das fertige Schließelement senkrecht zur Durchgangsachse des Ventilsitzes nur minimalen Platz. Der senkrecht zur Durchgangsachse des Ventilsitzes gewonnene Platz kann zur Verringerung des Einbauraums des Ventils, zur Vergrößerung des Durchgangsquerschnitts oder zur stabileren Ausbildung des Sitzventils genutzt werden. Wird der gewonnene Raum zur Vergrößerung des Durchflußquerschnittes genutzt, dann werden verbesserte Durchflußverhältnisse bei gleichen Abmessungen erreicht. Wird der gewonnene Raum zur Verstärkung anderer Komponenten, z.B. der Zylinderführung, genutzt, dann ergibt sich eine höhere Standzeit des Sitzventils bei verbesserter Betriebssicherheit. Wird der gewonnene Raum zur Verringerung der baulichen Abmessungen des Sitzventils genutzt, dann wird bei gleichem Fluiddurchgang Platz in den hydraulischen Elementen gespart, in die das Sitzventil eingebaut wird. Ferner werden im letztgenannten Fall auch Material und Gewicht gespart. Die Führungsfläche ist in Richtung der Durchgangsachse des Ventilsitzes sehr lang; dadurch ergibt sich auch bei großem Hub des Schließelementes eine saubere und verschleißarme Führung, weil Reaktionskräfte großflächig übertragen werden. Die verbesserte Führung ermöglicht auch den sicheren und direkten Angriff der Ventilschließfeder. Speziell für die Großserienproduktion ist es vorteilhaft, daß sich die Führungsfläche aus der Vollkugel durch einfaches Centerless-Schleifen ohne teure Hilfseinrichtungen formen läßt. Beispielsweise ist für eine durchgehärtete Stahlvollkugel mit 8mm Durchmesser ein Centerless-Schleifvorgang von nur 0,3 Sek.nötig, um die Führungsfläche zu formen. Da die beiden Kugelkalotten symmetrisch und gleich groß und von gleicher Oberflächengüte sind, kann schließlich bei Verschleiß einer Kugelkalotte das Schließelement umgedreht und ohne Nachbearbeitung weiter verwendet werden. Dadurch wird selbst bei nicht gehärtetem Ventilsitz die Standzeit des Sitzventils verlängert. Die lange Führungsfläche zeigt eine hohe Oberflächenqualität und Ebenheit, so daß sich das Schließelement auch in einer Gleitpassung führen läßt und dann unter dynamischen Strömungskräften nicht tanzt. Es läßt sich das Schließelement sogar druckvorsteuern. Dies ermöglicht ohne Mehraufwand eine weitere Ventilfunktion.

Bei der Ausführungsform gemäß Anspruch 2 wird viel Raumgewinn senkrecht zur Durchgangsachse des Ventilsitzes erzielt, ohne die ordnungsgemäße Kooperation zwischen der Dichtfläche und dem Ventilsitz zu gefährden.

Für die Praxis bewährt sich speziell die Ausführungsform gemäß Anspruch 3. Es wird mit optimalen Dichteigenschaften ein optimiertes Durchströmverhalten erzielt, weil das Druckmittel nicht mehr von einer kugeligen Fläche zur Seite gedrängt bzw. umgelenkt wird bzw. zentraler achsparallel und gleichförmig zum Ventilsitz strömt (hoher Durchsatz ohne Verwirbelung).

Gemäß Anspruch 4 ist das Schließelement in Hubrichtung sauber geführt (leichter Schiebesitz oder Gleitpassung). Dadurch unterbleiben Vibrationen oder ein Tanzen des Schließelementes unter der Strömungsdynamik bei geöffnetem Sitzventil. Diese aufgrund der Form des Schließelementes reduzierten mechanischen Belastungen ermöglichen die Verwendung eines nicht gehärteten Ventilsitzes. Der Ventilsitz und die Zylinderführung lassen sich deshalb direkt in einen Gehäuseblock oder in das Material einer anderen hydraulischen Vorrichtung einarbeiten, wodurch die Herstellung eines Ringkörpers für den Ventilsitz und eines Grundkörpers für das Schließelement eingespart werden. Dem Schließelement kann formbedingt auch ein gedämpftes Öffnungs- und Schließverhalten verliehen werden, was für spezielle Anwendungsfälle wünschenswert ist.

Gemäß Anspruch 5 wird die durch die saubere Führung des Schließelementes geschaffene Dichtzone für eine weitere Ventilfunktion herangezogen, und zwar zu einer Druckvorsteuerung der Ventilfunktion herangezogen. Ist die Steuerkammer permanent mit dem dem Ventilsitz zugewandten Teil der Gehäusebohrung verbunden, dann wird mittels des in der Steuerkammer wirksamen Drucks eine zusätzliche Zuhaltekraft am Schließelement erzeugt, die zu einem vorbestimmbaren Öffnungsverhalten führt. Ist die Steuerkammer an eine eigene Drucksteuervorrichtung angeschlossen, dann lassen sich die Öffnungs- und Schließbewegungen des Schließelementes druckvorsteuern. Diese weiteren Ventilfunktionen werden mit dem preiswerten und universell einsetzbaren Schließelement erhalten, das Einbauraum spart und keine besonderen Anforderungen an die Materialpaarung mit der Zylinderführung und/oder dem Ventilsitz stellt, insbesondere da es dank der großen Führungsfläche sehr sauber geführt wird.

Für die Betriebssicherheit des Sitzventils ist die Ausführungsform gemäß Anspruch 6 zweckmäßig. Selbst bei vollständiger Ausnutzung des Radialspiels gelangt das Schließelement in keine Lage, in der nicht ein in Umfangsrichtung geschlossener Kontaktbereich zwischen der Dichtfläche und dem Ventilsitz vorliegt.

Je nach den Anforderungen an das Sitzventil, die zu beherrschenden Drücke bzw. Durchflußmengen bzw. Strömungsgeschwindigkeiten, an die Art des Druckmittels und im Hinblick auf den Kugeldurchmesser wird ein kleines (Gleitpassung) oder ein größeres Radialspiel zwischen der Führungsfläche und der Zylinderführung vorgesehen.

Die Ausführungsform gemäß Anspruch 7 ist besonders vorteilhaft, weil die Paarung: durchgehärtetes Schließelement und durchgehärteter Ventilsitz, ausschließt, daß der Ventilsitz bzw. die Dichtfläche beschädigt werden.

Gemäß Anspruch 8 ist nur das Schließelement eine durchgehärtete Stahlkugel. Der Ventilsitz und/oder die Zylinderführung können geringeren Anforderungen entsprechen, da schädliche Eigenbewegungen des Schließelementes unter der Strömungsdynamik minimiert sind und eine gedämpfte Bewegung vorbestimmbar ist.

Im Hinblick auf die Großserienproduktion ist die Ausführungsform gemäß Anspruch 9 wichtig, weil Centerless-Schleifen ein preiswertes Verfahren ist und außerordentlich kurze Taktzeiten ermöglicht. Es lassen sich gleichzeitig mehrere Vollkugeln bearbeiten. Jegliche Nachbearbeitung entfällt.

Anhand der Zeichnung werden Ausführungsformen des Erfindungsgegenstandes erläutert. Es zeigen:
- Fig. 1: einen Längsschnitt durch eine erste Ausführungsform eines Sitzventils, obere Hälfte: Durchgangsstellung; untere Hälfte: Schließstellung,
- Fig. 2: einen schematischen Längssschnitt einer anderen Ausführungsform (Durchgangsstellung), und
- Fig. 3: einen Längsschnitt zu Detailvarianten.

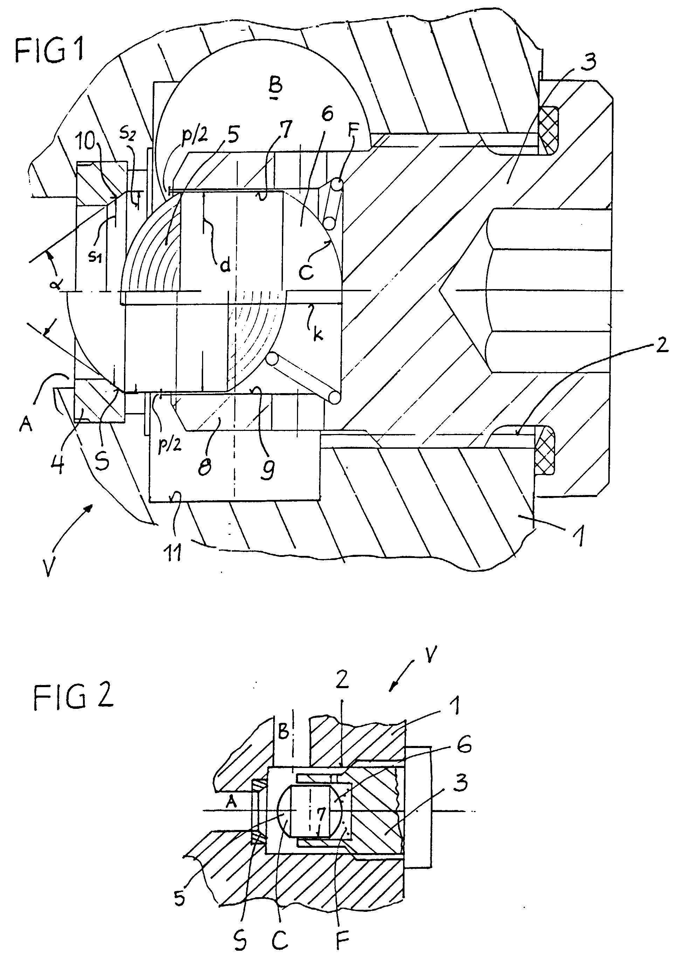

Ein Sitzventil V gemäß Fig. 1 (Einschraub-Rückschlagventil) überwacht die Druckmittelströmung zwischen Kanälen A und B. In Strömungsrichtung von A nach B öffnet, von B nach A sperrt das Sitzventil V. In einem Gehäuse 1 ist eine Gewindebohrung 2 vorgesehen, in die ein Grundkörper 3 des Sitzventils V eingeschraubt ist. Am zum Strömungskanal A weisenden Ende der Gewindebohrung 2 ist ein ringförmiger Körper 4 festgelegt, in dem ein kegeliger Ventilsitz S geformt ist. Angrenzend an den Ventilsitz S ist in der Gewindebohrung 2 ein umlaufender Einstich 11 geformt, der den Strömungskanal B schneidet. Der Grundkörper 3 besitzt einen kragenartigen Fortsatz 8, dessen Innenwand eine Zylinderführung 9 für ein Schließelement C bildet, das durch spanende Bearbeitung, insbesondere durch Centerless-Schleifen, aus einer handelsüblichen Vollkugel hergestellt ist. Zweckmäßigerweise ist das Schließelement C aus einer durchgehärteten Stahlkugel mit geschliffener Kugel-Oberfläche hergestellt. Das Schließelement C weist zwei symmetrische, gleich große Kugelkalotten auf, die kugelige Dichtflächen 5, 6 bilden, und dazwischen eine zylindrische Führungsfläche 7, in deren Zylinderachse das Zentrum der Vollkugel liegt.

In der in der unteren Hälfte von Fig. 1 gezeigten Absperrstellung kooperiert die Dichtfläche 5 mit dem Ventilsitz S in einem in Umfangsrichtung ununterbrochenen Kontaktbereich 10 (Durchmesser sl). Der Ventilsitz S ist mit einem Kegelwinkel a von etwa 70° ausgebildet. Der größere Innendurchmesser s2 des Ventilsitzes S ist dem Schließelement C zugewandt. Der Durchmesser d der Führungsfläche 7 entspricht in etwa dem Durchmesser s2. Zwischen der Führungsfläche 7 und der Zylinderführung 9 ist ein Radialspiel p vorgesehen, das bei zentrischer Lage des Schließelementes C an jeder Seite mit p/2 angedeutet ist. Das Schließelement C wird durch eine Feder F in Richtung zum Ventilsitz S beaufschlagt, die innerhalb des Fortsatzes 8 angeordnet ist und sich direkt am Schließelement C abstützt. Der Vollkugel-Durchmesser des Schließelements C ist k.

Der Durchmesser d der Führungsfläche 7 liegt zwischen 75% und 90%, vorzugsweise zwischen 80 und 82%, des Vollkugel-Durchmessers k. Das Radialspiel p der Führungsfläche 7 in der Zylinderführung 9 des Grundkörpers 3 liegt z.B. zwischen 1,5% und 7,0%, vorzugsweise zwischen etwa 2,5 und 3%, des Vollkugel-Durchmessers k. Der größere Innendurchmesser s2 des Ventilsitzes S ist z.B. geringfügig größer als der Durchmesser d der Führungsfläche 7 (bei der gezeigten Ausführungsform). Die in Richtung der Durchgangsachse des Ventilsitzes (S) gesehene Länge der Führungsfläche 7 liegt bei ca. 40 bis 50% des Vollkugel-Durchmessers k.

Unter der Annahme, daß der Durchmesser der Gewindebohrung 2 wie auch der Durchmesser des Ventilsitzes S festgelegt sind, läßt sich der Fortsatz 8 der Zylinderführung 9 bei gleichem Durchflußquerschnitt dicker ausbilden, als mit einer Vollkugel, wodurch eine stabilere Abstützung des Schließelements erreicht ist. Wird hingegen aufgrund des Raumgewinns durch die Führungsfläche 7 der Außendurchmesser des Fortsatzes 8 entsprechend reduziert, dann läßt sich unter Beibehalt des Durchflußquerschnittes der Einstich 11 mit kleinerem Durchmesser ausbilden. Ferner könnte dann auch der Durchmesser des Grundkörpers 3 bzw. der Durchmesser der Gewindebohrung 2 verringert werden, um Bauraum im Gehäuse 1 einzusparen.

Bei der Ausführungsform des Sitzventils V gemäß Fig. 2 ist der Grundkörper 3 im Hinblick auf den Raumgewinn durch die Führungsfläche 7 mit kleinerem Durchmesser ausgebildet, so daß auch die Gewindebohrung 2 kleiner ausgebildet werden kann, wodurch im Gehäuse 1 Platz gespart wird. Sollte die Dichtfläche 5 verschlissen oder beschädigt sein, dann läßt sich bei beiden Ausführungsformen das Schließelement C umdrehen und weiter verwenden.

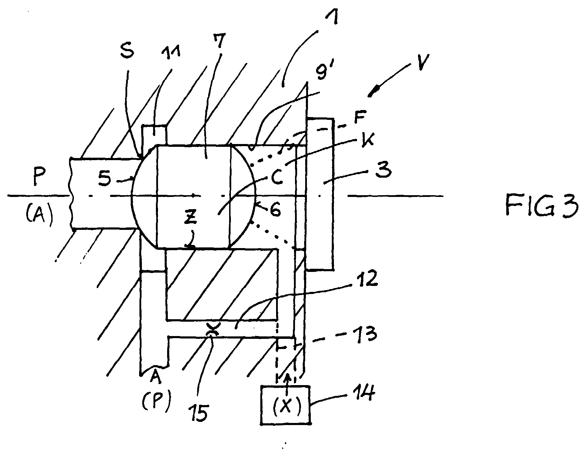

Die Ausführungsform des Sitzventils V gemäß Fig. 3 ist baulich besonders einfach, weil die Zylinderführung 9' eine direkt in einen Ventilblock 1 eingearbeitete Bohrung ist, und der Ventilsitz S (ungehärtet) aus dem Material des Ventilblocks 1 herausgearbeitet ist. Das Ventilschließelement C sitzt mit seiner Führungsfläche 7 mit einer Schiebe- oder einer leichten Gleitpassung in der Zylinderführung 9'.Es liegt deshalb eine relativ lange Führungs- und vor allem Dichtzone Z vor. Der dem Ventilsitz S abgewandte Teil der Gehäusebohrung bzw. Zylinderführung 9' bildet eine Steuerkammer K, die entweder über einen Kanal 12 mit dem Bereich 11 angrenzenden Ventilsitz S verbunden ist, gegebenenfalls über eine Drossel 15, und/oder über einen getrennten Kanal 13 (strichliert angedeutet) an eine eigene Drucksteuervorrichtung 14 angeschlossen ist, die einen wählbaren Steuerdruck X bereitstellen kann.

Ist nur der Kanal 12 vorgesehen, dann ist die Druckquelle P an den Ventilsitz S angeschlossen und das Druckmittel strömt von P nach A und hebt das Schließelement 7 vom Ventilsitz S ab, sobald der Druck bei P zusammen mit dem Druck auf die Kreisringfläche im Einstich 11 die Kraft des Drucks in der Steuerkammer K (zuzüglich der Kraft der Feder F) überwindet. Steigt der Druck bei A bzw. in der Steuerkammer wieder genügend an, dann wird das Schließelement nicht nur durch die Feder F, sondern auch durch den Druck in der Steuerkammer K in die Schließstellung gebracht.

Ist nur der Kanal 13 vorgesehen und an die Drucksteuervorrichtung X angeschlossen, dann ist die Druckquelle P an den Einstich 11 angeschlossen und das Druckmittel strömt von P nach A, und zwar in Abhängigkeit davon, wie hoch der in der Steuerkammer K eingesteuerte Druck ist bzw. sobald der Druck in der Steuerkammer durch die Drucksteuervorrichtung 14 entsprechend gesenkt ist. Sind beide Kanäle 12, 13 vorgesehen, dann ermöglicht die Drossel 15 die Druckvorsteuerung in der Steuerkammer K.

Das Verhältnis zwischen dem Durchmesser des Ventilsitzes S und dem Durchmesser der Führungsfläche 7 ist in Fig. 3 übertrieben dargestellt. Der Durchmesser der Führungsfläche 7 ist nämlich nur geringfügig größer als der Durchmesser des Ventilsitzes S. Auch bei dieser Ausführungsform läßt sich bei Verschleiß der Dichtfläche 5 das Schließelement C umdrehen, so daß dann die Dichtfläche 6 mit dem Ventilsitz S zusammenarbeitet.

Beim Centerless-Schleifen (nicht-dargestellt) des Schließelementes C liegt eine drehangetriebene, zylindrische Schleifscheibe einer ebenfalls drehangetriebenen, zylindrischen Antriebsscheibe mit einem Zwischenabstand gegenüber, der verändert wird, indem die beiden Scheiben (oder nur eine) verstellt werden. Eine Vollkugel B (oder mehrere übereinanderliegend gehaltene Vollkugeln) sind in den Zwischenraum zwischen den Scheiben eingesetzt und an einem z.B. entgegengesetzt zur Drehrichtung der Antriebsscheibe in den Zwischenraum eingreifenden Lineal abgestützt. Es sind keine weiteren Hilfseinrichtungen erforderlich. Ein Schleifdurchgang dauert bei einer z.B. 8mm-Vollkugel aus durchgehärtetem Stahl nur wenige Zehntel-Sekunden.

Die beiden gezeigten und beschriebenen Ausführungsformen stellen nur eine zu Anschauungszwecken getroffene Auswahl aus einer Vielzahl von Ausbildungsmöglichkeiten solcher Sitzventile dar, ohne daß die Erfindung darauf eingeschränkt sein soll. Die Verwendung derartiger Schließelemente ist für alle Sitzventile zweckmäßig, bei denen es auf möglichst wenig Einbauraum quer zur Durchgangsachse des Ventilsitzes, auf eine saubere Führung des Schließelementes im Betrieb und auf eine hohe Standzeit ankommt, wobei die kostengünstige Herstellung und die einfache Montage des Schließelementes sich insbesondere für die Großserienproduktion anbieten.

## Patentansprüche

1. Sitzventil (V) für die Hochdruckhydraulik, insbesondere Rückschlagventil, mit einem in einer Zylinderführung (9, 9') ggfs. durch eine Feder (F) in Richtung zu einem kegeligen Ventilsitz (S) beaufschlagten Schließelement (C), das durch spanende Bearbeitung aus einer Vollkugel (B) gebildet ist und wenigstens eine mit dem Ventilsitz (S) zusammenwirkende kugelige Dichtfläche (5, 6) sowie eine der Zylinderführung gegenüberliegende, zylindrische Führungsfläche (7) aufweist, **dadurch gekennzeichnet**, daß das Schließelement (C) ausschließlich durch Formen der zylindrischen Führungsfläche (7) an der Vollkugel (B) gebildet ist und zwei durch die Führungsfläche (7) getrennte symmetrische Kugelkalotten aufweist, die zwei wahlweise dem Ventilsitz (S) zuzuordnende Dichtflächen (5, 6) bilden, und daß der Durchmesser (d) der Führungsfläche (7) nur geringfügig größer ist als der Durchmesser (s1) des Kontaktbereiches (10) zwischen der Dichtfläche (5, 6) und dem Ventilsitz (S).

2. Sitzventil nach Anspruch 1, **dadurch gekennzeichnet**, daß der Durchmesser (d) der Führungsfläche (7) in etwa dem größeren Innendurchmesser (s2) des kegeligen Ventilsitzes (S) entspricht.

3. Sitzventil nach Anspruch 1, **dadurch gekennzeichnet**, daß der Ventilsitz (S) einen Kegelwinkel (α) von ca. 70° aufweist, und daß der Durchmesser (d) der Führungsfläche (7), und vorzugsweise der größere Innendurchmesser (s2) des Ventilsitzes (S), zwischen etwa 75% und 90%, vorzugsweise zwischen etwa 80 und 82%, des Vollkugel-Durchmessers (k) des Schließelementes (C) liegt bzw. liegen.

4. Sitzventil nach wenigstens einem der Ansprüche 1 bis 3, **dadurch gekennzeichnet**, daß die Führungsfläche (7) mit einer dichtenden Gleitpassung in der Zylinderführung (9') angeordnet ist, mit der Zylinderführung (9') eine Dichtzone (Z) bildet, und eine von der dem Ventilsitz (S) abgewandten Kugelkalotte begrenzte Steuerkammer (K) von der anderen Kugelkalotte trennt, derart, daß der Hub des Schließelements (C) relativ zum Ventilsitz (S) über seine eine Kugelkalotte drucksteuerbar ist.

5. Sitzventil nach Anspruch 4, **dadurch gekennzeichnet**, daß das Schließelement (C) in einer die Zylinderführung (9') bildenden Gehäusebohrung eines Ventilblocks (1) direkt abdichtend und relativ zum, vorzugsweise aus dem Ventilblock herausgearbeiteten, Ventilsitz (S) verschieblich geführt ist, und daß der an der dem Ventilsitz (S) abgewandten Seite des Schließelements (C) liegende, die Steuerkammer (K) bildende Teil der Gehäusebohrung über einen Kanal (12) an den dem Ventilsitz (S) zugewandten Teil (11) der Gehäusebohrung und/oder über einen Kanal (13) an eine Drucksteuervorrichtung (14) anschließbar ist.

6. Sitzventil nach wenigstens einem der Ansprüche 1 bis 3, **dadurch gekennzeichnet,** daß der Durchmesser (d) der Führungsfläche (7) um ein solches Maß (d-s1) geringfügig größer ist als der Durchmesser (sl) des Kontaktbereiches (10), mit dem bei aufgrund eines Radialspiels (p) der Führungsfläche (7) gegenüber der Zylinderführung (9) möglichen Bewegungen des Schließelementes (C) stets gerade noch ein in Umfangsrichtung unterbrochener Kontaktbereich (10) zwischen dem Ventilsitz (S) und der Dichtfläche (6, 5) sichergestellt ist.

7. Sitzventil nach wenigstens einem der vorhergehenden Ansprüchen, **dadurch gekennzeichnet**, daß das Schließelement (C) und ein den Ventilsitz (S) aufweisender Körper (4) aus durchgehärtetem Stahl bestehen.

8. Sitzventil nach wenigstens einem der Ansprüche 1 bis 6, **dadurch gekennzeichnet**, daß nur das Schließelement (C) aus durchgehärtetem Stahl, der Ventilsitz (S) hingegen aus ungehärtetem Stahl, besteht.

9. Sitzventil nach wenigstens einem der Ansprüche 1 bis 8, **dadurch gekennzeichnet**, daß das Schließelement (C) mit der Führungsfläche (7) durch Centerless-Schleifen aus einer durchgehärteten, vorzugsweise geschliffenen, Stahl-Vollkugel (B) gebildet ist.

## Claims

1. Seat valve (V) for high-pressure hydraulics, in particular a non-return valve, with a closing element (C) which is loaded in a cylinder guide (9, 9'), if appropriate by a spring (F), in the direction of a conical valve seat (S) and which is formed by cutting machining from a solid sphere (B) and has at least one spherical sealing surface (5, 6) cooperating with the valve seat (S) and also a cylindrical guide surface (7) located opposite the cylinder guide, characterized in that the closing element (C) is formed solely by the shaping of the cylindrical guide surface (7) on the solid sphere (B) and has two symmetrical spherical caps which are separated by the guide surface (7) and which form two sealing surfaces (5, 6) to be assigned selectively to the valve seat (S), and in that the diameter (d) of the guide surface (7) is only slightly larger than the diameter (s1) of the contact region (10) between the sealing surface (5, 6) and the valve seat (S).

2. Seat valve according to Claim 1, characterized in that the diameter (d) of the guide surface (7) corresponds approximately to the larger inside diameter (s2) of the conical valve seat (S).

3. Seat valve according to Claim 1, characterized in that the valve seat (S) has a cone angle (α) of approximately 70°, and in that the diameter (d) of the guide surface (7), and preferably the larger inside diameter (s2) of the valve seat (S), are between about 75% and 90%, preferably between about 80 and 82%, of the solid-sphere diameter (k) of the closing element (C).

4. Seat valve according to at least one of Claims 1 to 3, characterized in that the guide surface (7) is arranged with a sealing sliding fit in the cylinder guide (9'), forms with the cylinder guide (9') a sealing zone (Z) and separates a control chamber (K), delimited by the spherical cap facing away from the valve seat (S), from the other spherical cap, in such a way that the stroke of the closing element (C) relative to the valve seat (S) can be pressure-controlled via the one spherical cap of the said closing element.

5. Seat valve according to Claim 4, characterized in that the closing element (C) is guided in a housing bore, forming the cylinder guide (9'), of a valve block (1) so as to seal off directly and so as to be displaceable relative to the valve seat (S) which is preferably worked out of the valve block, and in that that part of the housing bore which is located on the side of the closing element (C) facing away from the valve seat (S) and which forms the control chamber (K) can be connected, via a duct (12), to that part (11) of the housing bore which faces the valve seat (S) and/or, via a duct (13), to a pressure-control device (14).

6. Seat valve according to at least one of Claims 1 to 3, characterized in that the diameter (d) of the guide surface (7) is slightly larger by such an amount (d-s1) than the diameter (s1) of the contact region (10) which, in the event of movements of the closing element (C) which are possible due to radial play (p) of the guide surface (7) relative to the cylinder guide (9), always still just ensures a circumferentially interrupted contact region (10) between the valve seat (S) and the sealing surface (6, 5).

7. Seat valve according to at least one of the preceding claims, characterized in that the closing element (C) and a body (4) having the valve seat (S) consist of fully hardened steel.

8. Seat valve according to at least one of Claims 1 to 6, characterized in that only the closing element (C) consists of fully hardened steel, whereas the valve seat (S) consists of unhardened steel.

9. Seat valve according to at least one of Claims 1 to 8, characterized in that the closing element (C) together with the guide surface (7) is formed by centreless grinding from a fully hardened, preferably ground solid steel sphere (B).

## Revendications

1. Soupape à siège (V) pour l'hydraulique à haute pression, soupape antiretour en particulier, avec un élément de fermeture (C) sollicité dans un guidage cylindrique (9, 9'), éventuellement par un ressort (F), en direction d'un siège de soupape conique (S), cet élément étant formé par usinage à partir d'une bille massive (B) et présentant au moins une surface d'étanchéité sphérique (5, 6) qui concourt avec le siège de soupape (S), ainsi qu'une surface de guidage cylindrique (7) en vis-à-vis du guidage cylindrique, caractérisée en ce que l'élément de fermeture (C) est exclusivement formé par formage de la surface de guidage cylindrique (7) sur la bille massive (B) et présente deux calottes sphériques symétriques, séparées par la surface de guidage (7), qui forment deux surfaces d'étanchéité (5, 6) à associer sélectivement au siège de soupape (S), et en ce que le diamètre (d) de la surface de guidage (7) n'est que légèrement supérieur au diamètre (s1) de la zone de contact (10) entre la surface d'étanchéité (5, 6) et le siège de soupape (S).

2. Soupape à siège suivant la revendication 1, caractérisée en ce que le diamètre (d) de la surface de guidage (7) correspond à peu près au diamètre interne supérieur (s2) du siège de soupape conique (S).

3. Soupape à siège suivant la revendication 1, caractérisée en ce que le siège de soupape (S) présente un angle de cône (α) d'environ 70°, et en ce que le diamètre (d) de la surface de guidage (7), et de préférence le diamètre interne supérieur (s2) du siège de soupape (S), se situe et/ou se situent entre à peu près 75 % et 90 %, de préférence entre à peu près 80 et 82 %, du diamètre (k) de la bille massive de l'élément de fermeture (C).

4. Soupape à siège suivant au moins l'une des revendications 1 à 3, caractérisée en ce que la surface de guidage (7) est disposée dans le guidage cylindrique (9') avec un ajustement glissant d'étanchéité, forme une zone d'étanchéité (Z) avec le guidage cylindrique (9'), et sépare un compartiment de commande (K), délimité par la calotte sphérique opposée au siège de soupape (S), de l'autre calotte sphérique, de sorte que la course de l'élément de fermeture (C) par rapport au siège de soupape (S) peut être pilotée en pression par l'intermédiaire de l'une de ses calottes sphériques.

5. Soupape à siège suivant la revendication 4, caractérisée en ce que l'élément de fermeture (C) a un guidage mobile dans un trou de corps, formant le guidage cylindrique (9'), d'un bloc de soupape (1), de façon directement étanche et par rapport au siège de soupape (S), de préférence façonné dans le bloc de soupape, et en ce que la partie du trou de corps formant le compartiment de commande (K), située sur le côté de l'élément de fermeture (C) opposé au siège de soupape (S), peut être reliée par l'intermédiaire d'un canal (12) à la partie (11) du trou de corps tournée vers le siège de soupape (S) et/ou par l'intermédiaire d'un canal (13) à un dispositif de commande de pression (14).

6. Soupape à siège suivant au moins l'une des revendications 1 à 3, caractérisée en ce que le diamètre (d) de la surface de guidage (7) est légèrement supérieur d'une telle cote (d-s1) au diamètre (s1) de la zone de contact (10), par laquelle est constamment garantie, lors de mouvements de l'élément de fermeture (C) possibles en raison d'un jeu radial (p) de la surface de guidage (7) par rapport au guidage cylindrique (9), une zone de contact (10), ininterrompue dans le sens périphérique, entre le siège de soupape (S) et la surface d'étanchéité (6, 5).

7. Soupape à siège suivant au moins l'une des revendications précédentes, caractérisée en ce que l'élément de fermeture (C) et un corps (4), présentant le siège de soupape (S), se composent d'acier trempé à coeur.

8. Soupape à siège suivant au moins l'une des revendications 1 à 6, caractérisée en ce que seul l'élément de fermeture (C) se compose d'acier trempé à coeur, le siège de soupape (S) se composant en revanche d'acier non trempé.

9. Soupape à siège suivant au moins l'une des revendications 1 à 8, caractérisée en ce que l'élément de fermeture (C), avec la surface de guidage (7), est formé par rectification centerless à partir d'une bille massive en acier trempée à coeur, de préférence rectifiée.
